# EUROPEAN PATENT APPLICATION

(11) **EP 3 859 946 A1**
(43) Date of publication of application: **04.08.2021**
(21) Application number: 19867776.7
(22) Date of filing: 20.09.2019
(51) Int. Cl.: H02K 3/18, H01F 5/00, H01F 27/28, H01F 41/061, H02K 9/22

(54) **COIL MOUNTING STRUCTURE, STATOR, AND MOTOR**

(30) Priority: 25.09.2018 JP 2018178924
(71) Applicant: Panasonic Intellectual Property Management Co., Ltd., Osaka-shi, Osaka 540-6207 (JP)
(72) Inventor: HISHIDA, Mitsuoki, Osaka-shi, Osaka 540-6207 (JP); YONEDA, Hiroshi, Osaka-shi, Osaka 540-6207 (JP); NAKANO, Keisaku, Osaka-shi, Osaka 540-6207 (JP); SATO, Takanobu, Osaka-shi, Osaka 540-6207 (JP)
(74) Representative: SSM Sandmair
(86) International application number: PCT/JP2019/036995
(87) International publication number: WO 2020/066900

(57) **Abstract**

Provided is a coil mounting structure including: a coil having first to n-th turns (n is an integer of 2 or more) that are formed by bending a plate-like member extending in a strip-like shape in a width direction of the plate-like member and spirally winding the plate-like member multiple times forming a quadrangular shape in plan view; and a columnar core extending with a quadrangular cross section in an extending direction, the coil being mounted on the columnar core, the columnar core being composed of a stacked body in which a plurality of core sheets made of electromagnetic steel sheets are stacked in a stacking direction orthogonal to the extending direction of the columnar core, the columnar core having one end surface in the stacking direction, with an outer periphery in which a burr is formed and projected in a projection direction. The first to n-th turns of the coil each have an inner peripheral edge formed with a recess that is recessed toward an outer periphery. The recess faces the burr of the columnar core from the projection direction of the burr.

## Description

### TECHNICAL FIELD

The present invention relates to a coil mounting structure in which a coil includes first to n-th turns (n is an integer of 2 or more) that are formed by bending a plate-like member extending in a strip-like shape in its width direction and spirally winding the plate-like member multiple times forming a quadrangular shape in plan view, and the coil is mounted on a columnar core extending with a quadrangular cross section.

### BACKGROUND ART

PTL 1 discloses a coil mounting structure in which a coil includes first to n-th turns (n is an integer of 2 or more) that are formed by bending a plate-like member extending in a strip-like shape in its width direction and spirally winding the plate-like member multiple times forming a quadrangular shape in plan view, and the coil is mounted on a columnar core extending with a quadrangular cross section. This mounting structure is configured such that the first to n-th turns of the coil each have four corners at its inner peripheral edge with respective recesses that are recessed toward an outer periphery, and the recesses accommodate respective corners of the columnar core to reduce a gap between each side of the columnar core and corresponding one of straight portions of the coil as compared to when no recess is formed, thereby increasing a volume of the columnar core that can be accommodated inside the coil.

Incidentally, when a coil mounting structure as in PTL 1 includes a columnar core composed of a stacked body in which a plurality of core sheets made of electromagnetic steel sheets are stacked in a direction orthogonal to an extending direction of the columnar core, a burr is formed and projected in an outer periphery of one end surface of the columnar core in its stacking direction by press forming. In such a case, when a portion formed with no recess, in an inner peripheral edge of each of first to n-th turns of a coil, is caused to face the burr from a projection direction of the burr, a space where no coil is wound, i.e., a dead space, is widely formed between a region formed with no burr, in a burr forming surface of the columnar core, and the inner peripheral edge of each of the first to n-th turns of the coil. This may cause deterioration in heat dissipation efficiency of the coil.

### Citation List

### Patent Literature

PTL 1: Unexamined Japanese Patent Publication No. 2015-228476

### SUMMARY OF THE INVENTION

The present invention is made in view of the above points, and an object of the present invention is to improve heat dissipation efficiency of a coil.

To achieve the above object, a first technique of the present disclosure is a coil mounting structure including: a coil having first to n-th turns (n is an integer of 2 or more) that are formed by bending a plate-like member extending in a strip-like shape in a width direction of the plate-like member and spirally winding the plate-like member multiple times forming a quadrangular shape in plan view; and a columnar core extending with a quadrangular cross section in an extending direction, the coil being mounted on the columnar core, the columnar core being composed of a stacked body in which a plurality of core sheets made of electromagnetic steel sheets are stacked in a stacking direction orthogonal to the extending direction of the columnar core, the columnar core having one end surface in a stacking direction of the columnar core, with an outer periphery in which a burr is formed and projected in a projection direction, the first to n-th turns of the coil each having an inner peripheral edge formed with a recess that is recessed toward an outer periphery of the coil, and the recess facing the burr of the columnar core from the projection direction of the burr.

This structure enables the burr to be accommodated in the recess of the coil even when the burr has a projection height higher than an interval between a region formed with no burr, in a burr forming surface of the columnar core, and a portion formed with no recess, in the inner peripheral edge of the coil. Thus, the interval between the region formed with no burr, in the burr forming surface of the columnar core, and the portion formed with no recess, in the inner peripheral edge of the coil, can be set shorter than when no recess is provided. This enables improvement in heat dissipation efficiency of the coil by reducing a dead space formed between the region formed with no burr, in the burr forming surface of the columnar core, and the inner peripheral edge of the coil in the projection direction of the burr. Additionally, the dead space can be reduced in the projection direction of the burr, so that the coil can be reduced in size in the projection direction of the burr.

The recess may accommodate a tip portion of the burr.

This structure enables the interval between the region formed with no burr, in the burr forming surface of the columnar core, and the portion formed with no recess, in the inner peripheral edge of the coil, to be set shorter than when no recess is provided, because the burr is accommodated in the recess of the coil. This enables improvement in heat dissipation efficiency of the coil by reducing a dead space formed between the region formed with no burr, in the burr forming surface of the columnar core, and the inner peripheral edge of the coil in the projection direction of the burr. Additionally, the dead space can be reduced in the projection direction of the burr, so that the coil can be reduced in size in the projection direction of the burr.

The recess may be formed at each of opposite ends of one side or each of opposite end portions of respective two sides facing each other among four sides of the quadrangular shape in plan view, constituting the inner peripheral edge of each of the first to n-th turns of the coil, and may not be recessed in a direction in which the portion formed with no recess, in the side formed with the recess, extends.

This structure allows no recess to be formed in a portion extending along a side formed with no recess in each of the first to n-th turns of the coil, so that a resistance value of the coil is reduced as compared to when the recess is formed. Thus, a width of a portion of the coil, extending along the side formed with no recess, can be set to be short as a whole. This enables the coil to be downsized.

The coil may include a plate-like member and an insulating film provided on a surface of the plate-like member, and the recess may be formed in a curved shape as a whole.

This structure does not cause large contact pressure to be applied to a coil surface due to contact between a corner of the recess of the coil and the columnar core during assembly, as compared to when the corner is provided in the recess of the coil. This enables preventing the insulating film of the coil from being damaged during assembly.

A second technique of the present disclosure is a coil mounting structure including: tooth portions that each have a quadrangular cross section, and that are each projected on an inner peripheral surface of an annular yoke section of a stator of a motor while having an outer peripheral surface of each of the tooth portions, composed of a pair of first surfaces facing a motor rotation axis direction and a pair of second surfaces facing a motor rotation circumferential direction; and a coil having first to n-th turns (n is an integer of 2 or more) that are formed by bending a plate-like member extending in a strip-like shape in a width direction of the plate-like member and spirally winding the plate-like member multiple times forming a quadrangular shape in plan view; the coil being mounted on each of the tooth portions, the first to n-th turns of the coil each having an inner peripheral edge with two sides facing the motor rotation axis direction, the two sides including at least one side having opposite end portions formed with respective recesses that are recessed outward in the motor rotation axis direction and are not recessed outward in the motor rotation circumferential direction.

This structure allows the coil to have rounded portions formed in the respective recesses, and to have four sides that constitute the inner peripheral edge of each of first to tenth turns and that include two sides facing each other in the motor rotation circumferential direction, the two sides each including at least one end portion formed with no rounded portion. Thus, even when the tooth portions each have a width in the motor rotation circumferential direction that is set to be as wide as possible in accordance with an interval between the two sides of the coil, facing each other in the motor rotation circumferential direction, no dead space is required to be provided in at least one end portion of an inner space of the coil in the motor rotation axis direction. As compared to when no recess is provided, reducing the dead space enables improvement in heat dissipation efficiency of the coil and increase in a space factor of the coil in the stator, and thus efficiency of the motor can be improved. Additionally, a dead space in the end portion of the inner space of the coil in the motor rotation axis direction can be reduced. Thus, reducing the coil in size in the motor rotation axis direction enables the motor to be downsized in the motor rotation axis direction.

The first to n-th turns of the coil each have a portion extending in the motor rotation axis direction that is formed with no recess, and thus the portion has a lower resistance value than the portion formed with a recess. Thus, a portion of the coil, extending in the motor rotation axis direction, can be reduced in width as a whole, so that the motor can be downsized in the motor rotation circumferential direction.

The tooth portions may be each composed of a stacked body formed by stacking a plurality of core sheets made of electromagnetic steel sheets in the motor rotation axis direction, and a burr may be formed and projected in an outer periphery in one end surface of each of the tooth portions in the motor rotation axis direction. The recess may face the burr of the corresponding one of the tooth portions from a projection direction of the burr.

This structure enables the burr to be accommodated in the recess of the coil even when the burr has a projection height higher than an interval between a region formed with no burr, in a burr forming surface of each of the tooth portions, and a portion formed with no recess, in the inner peripheral edge of the coil. Thus, the interval between the region formed with no burr, in the burr forming surface of each of the tooth portions, and the portion formed with no recess, in the inner peripheral edge of the coil, can be set shorter than when no recess is provided. Reducing a dead space formed between the region formed with no burr, in the burr forming surface of each of the tooth portions, and the inner peripheral edge of the coil in the projection direction of the burr, i.e., in the motor rotation axis direction enables improvement in heat dissipation efficiency of the coil and increase in a space factor of the coil in the stator, and thus efficiency of the motor can be improved. The dead space can be narrowed in the motor rotation axis direction. Thus, reducing the coil in size in the motor rotation axis direction enables the motor to be downsized in the motor rotation axis direction.

A third technique of the present disclosure is a coil mounting structure including: tooth portions that each have a quadrangular cross section, and that are each projected on an inner peripheral surface of an annular yoke section of a stator of a motor while each of the tooth portions having the quadrangular cross section has an outer peripheral surface including two sides constituting a pair of first surfaces facing each other in a motor rotation axis direction, and two sides constituting a pair of second surfaces facing each other in a motor rotation circumferential direction; and a coil having first to n-th turns (n is an integer of 2 or more) that are formed by bending a plate-like member extending in a strip-like shape in a width direction of the plate-like member and spirally winding the plate-like member multiple times forming a quadrangular shape in plan view; the coil being mounted on each of the tooth portions, the first to n-th turns of the coil each having an inner peripheral edge with two sides facing each other in the motor rotation circumferential direction, the two sides including at least one side having opposite end portions formed with respective recesses that are recessed outward in the motor rotation circumferential direction and are not recessed outward in the motor rotation axis direction.

This structure allows the coil to have rounded portions formed in the respective recesses, and to have four sides that constitute the inner peripheral edge of each of first to tenth turns and that include two sides facing the motor rotation axis direction, the two sides each including at least one end portion formed with no rounded portion. Thus, even when the tooth portions each have a width in the motor rotation axis direction that is set to be as wide as possible in accordance with an interval between the two sides of the coil, facing each other in the motor rotation axis direction, no dead space is required to be provided in at least one end portion of an inner space of the coil in the motor rotation circumferential direction. As compared to when no recess is provided, reducing the dead space enables improvement in heat dissipation efficiency of the coil and increase in a space factor of the coil in the stator, and thus efficiency of the motor can be improved. Additionally, a dead space in the end portion of the inner space of the coil in the motor rotation circumferential direction can be reduced. Thus, reducing the coil in size in the motor rotation circumferential direction enables the motor to be downsized in the motor rotation circumferential direction.

The first to n-th turns of the coil each have a portion extending in the motor rotation circumferential direction that is formed with no recess, and thus the portion has a lower resistance value than the portion formed with a recess. Thus, a portion of the coil, extending in the motor rotation circumferential direction, can be reduced in width as a whole, so that the motor can be downsized in the motor rotation axis direction.

The coil may include a plate-like member and an insulating film provided on a surface of the plate-like member, and the recess may be formed in a curved shape as a whole.

This structure does not cause large contact pressure to be applied to a coil surface due to contact between a corner of the recess of the coil and each of the tooth portions during assembly, as compared to when the corner is provided in the recess of the coil. This enables preventing the insulating film of the coil from being damaged during assembly.

The present disclosure enables improvement in heat dissipation efficiency of the coil.

### BRIEF DESCRIPTION OF DRAWINGS

FIG. 1A is a plan view of a motor to which a coil mounting structure according to a first exemplary embodiment is applied.
FIG. 1B is a side view of the motor to which the coil mounting structure according to the first exemplary embodiment is applied.
FIG. 1C is a sectional view taken along line 1C-1C in FIG. 1B.
FIG. 2 is a perspective view of a coil according to the first exemplary embodiment.
FIG. 3 is a side view of the coil according to the first exemplary embodiment as viewed from one side in a motor rotation circumferential direction.
FIG. 4 is a perspective view in which a coil according to the first exemplary embodiment is mounted on a tooth portion.
FIG. 5 is an enlarged sectional view around a burr of the tooth portion taken along line 4Q-4Q in FIG. 4.
FIG. 6 is an enlarged sectional view around a shear droop of the tooth portion taken along line 4Q-4Q in FIG. 4.
FIG. 7 is a perspective view of a coil of a comparative example.
FIG. 8 is a perspective view of the coil of the comparative example.
FIG. 9 is an enlarged sectional view around a shear droop of a tooth portion of the coil of the comparative example.
FIG. 10 is an enlarged sectional view around a shear droop when a coil according to a second exemplary embodiment is mounted on a tooth portion.
FIG. 11 is an enlarged sectional view around a shear droop when a coil according to a third exemplary embodiment is mounted on a tooth portion.

### DESCRIPTION OF EMBODIMENTS

Hereinafter, exemplary embodiments of the present invention will be described with reference to the drawings.

### (First exemplary embodiment)

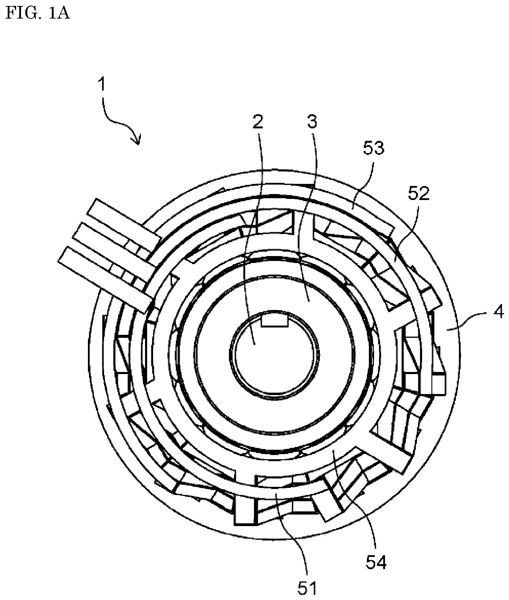

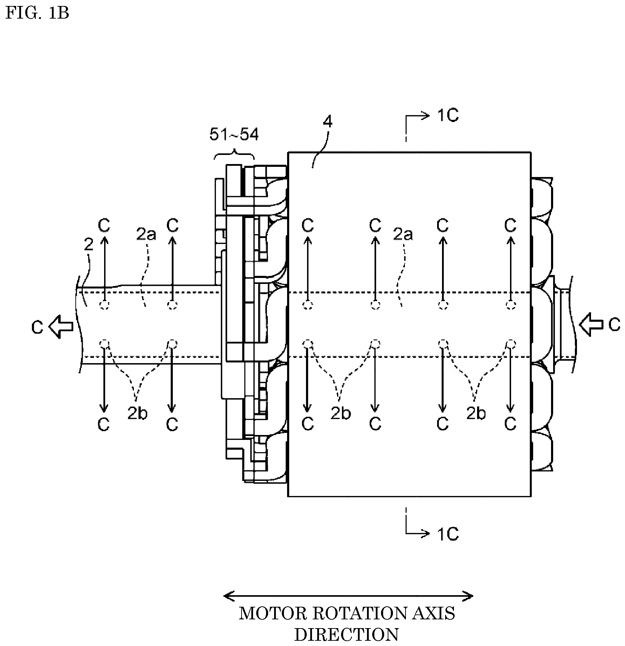

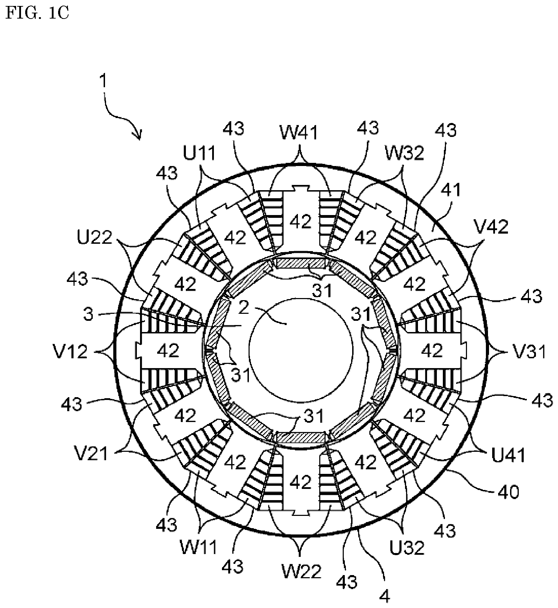

FIG. 1A is a plan view of motor 1 to which a coil mounting structure according to a first exemplary embodiment is applied. FIG. 1B is a side view of motor 1 to which the coil mounting structure according to the first exemplary embodiment is applied. FIG. 1C is a sectional view taken along line 1C-1C in FIG. 1B. However, any one of the drawings does not illustrate a cover case and the like. Motor 1 includes the cover case (not illustrated) that is provided inside with shaft 2, rotor 3, stator 4, coils U11, U22, U32, U41, V12, V21, V31, V42, W11, W22, W32, and W41 to which the mounting structure according to the first exemplary embodiment is applied, and bus bars 51 to 54.

In FIGS. 1A and 1C, a direction perpendicular to the paper surface is a motor rotation axis direction.

Here, a term, "integral" or "integrated", means a state of one object where a plurality of parts are not only mechanically connected by bolting or caulking, but also electrically connected by material bonding such as covalent bonding, ionic bonding, and metal bonding, or a state of one object where an entire part is electrically connected by material bonding such as melting or the like.

Shaft 2 is provided inside with hollow portion 2a extending in the motor rotation axis direction, and is provided in its side surface with a plurality of through-holes 2b. Hollow portion 2a serves as a passage for refrigerant C for cooling the inside of motor 1. Refrigerant C flows in hollow portion 2a along the motor rotation axis direction (longitudinal direction of shaft 2) and circulates inside motor 1. Some of refrigerant C flowing through hollow portion 2a flows out from the plurality of through-holes 2b and also flows from a center side of motor 1 to the outside, i.e., in a direction from rotor 3 to stator 4, to cool rotor 3 and stator 4.

Rotor 3 is provided in contact with an outer circumference of shaft 2, and includes magnets 31 facing the stator 4 and having N poles and S poles alternately disposed along an outer circumferential direction of shaft 2. Although in the present exemplary embodiment, a neodymium magnet is used as each of magnets 31 used in rotor 3, magnets 31 may be appropriately changed in material, shape, or quality of material depending on output or the like of motor 1.

Stator 4 includes stator core 40. Stator core 40 includes yoke section 41 in a substantially annular shape. Yoke section 41 is provided on its inner peripheral surface with a plurality of tooth portions 42 as columnar cores that each extend with a quadrangular cross section except its tip portion, and that are projected at equal intervals while each having an outer peripheral surface composed of a pair of surfaces facing the motor rotation axis direction and a pair of other surfaces facing the motor rotation circumferential direction. The tip portion of each of tooth portions 42 projects to both sides in the motor rotation circumferential direction. Between adjacent tooth portions 42, slot 43 is provided. Stator 4 is disposed outside rotor 3 at a predetermined interval as viewed in the motor rotation axis direction.

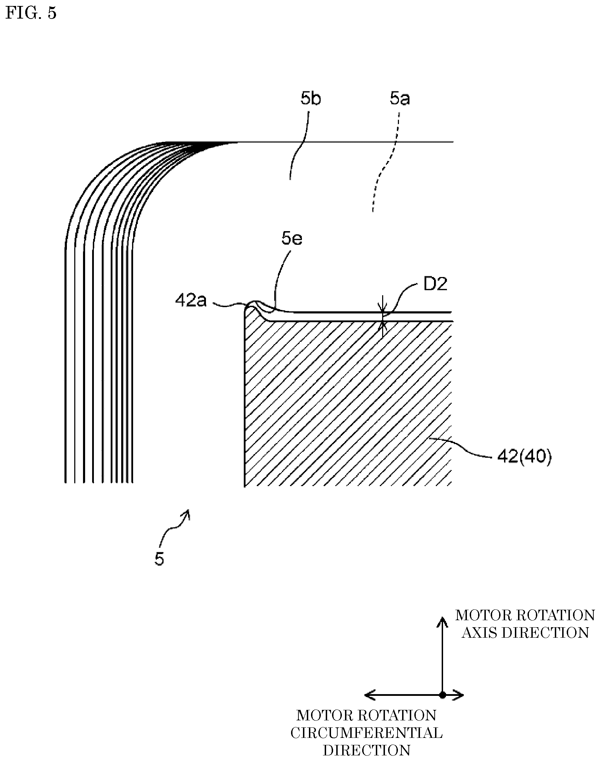

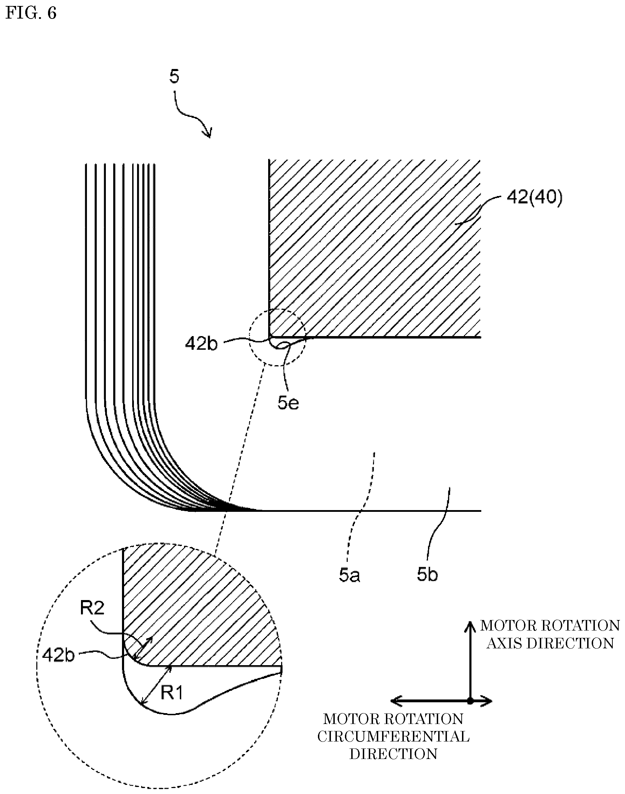

Tooth portions 42 of stator core 40 are each composed of a stacked body formed by stacking a plurality of core sheets made of electromagnetic steel sheets containing silicon or the like in the motor rotation axis direction (direction orthogonal to the extending direction of each of tooth portions 42). Each of tooth portions 42 is formed by blanking after the core sheets are stacked. Each of tooth portions 42 has one end surface in the motor rotation axis direction with an outer periphery formed with burr 42a (refer to FIG. 5) that is projected by blanking. In contrast, each of tooth portions 42 has the other end surface in the motor rotation axis direction with an outer periphery formed with shear droop 42b (refer to FIG. 6) that is curved toward one side (inside) in the motor rotation axis direction toward an outer periphery of the other end surface by blanking.

The present exemplary embodiment includes rotor 3 having ten magnetic poles in total, i.e., five N-poles and five S-poles, facing stator 4, and twelve slots 43. However, the present invention is not particularly limited to this, and combinations of another number of magnetic poles and another number of slots can be also applied.

Stator 4 includes twelve coils U11, U22, U32, U41, V12, V21, V31, V42, W11, W22, W32, and W41. Coils U11, U22, U32, U41, V12, V21, V31, V42, W11, W22, W32, and W41 are mounted on respective tooth portions 42, and are disposed in respective slots 43 as viewed in the motor rotation axis direction. That is, coils U11, U22, U32, U41, V12, V21, V31, V42, W11, W22, W32, and W41 are wound around respective tooth portions 42 by concentrated winding. Then, coils U11, U22, U32, and U41 are disposed integrally with bus bar 51, coils V12, V21, V31, and V42 are disposed integrally with bus bar 52, and coils W11, W22, W32, and W41 are disposed integrally with bus bar 53.

Here, symbols UXY, VXY, and WXY, representing the coils, each have a first character representing a phase of motor 1 (U phase, V phase, or W phase in the present exemplary embodiment). A second character represents a sequence order of the coils in an identical phase. A third character represents a winding direction of the coil. In the present exemplary embodiment, a clockwise direction is indicated as 1 and a counterclockwise direction is indicated as 2. Thus, coil U11 represents a first coil in sequence order in the U-phase and a winding direction that is the clockwise direction. Coil V42 represents a fourth coil in sequence order in the V-phase, and a winding direction that is the counterclockwise direction. The clockwise direction means turning right as viewed from a center of motor 1, and the "counterclockwise direction" means turning left as viewed from the center of motor 1.

Strictly speaking, coils U11, U41 are each a U-phase coil, and coils U22, U32 are each a U-bar phase in which a magnetic field generated is opposite in direction to that of the U-phase coil. However, unless otherwise specified, the coils are collectively referred to as U-phase coils in the following description. Similarly, coils V12 to V42 and coils W11 to W41 are also collectively referred to as V-phase coils and W-phase coils, respectively.

### [Coil structure]

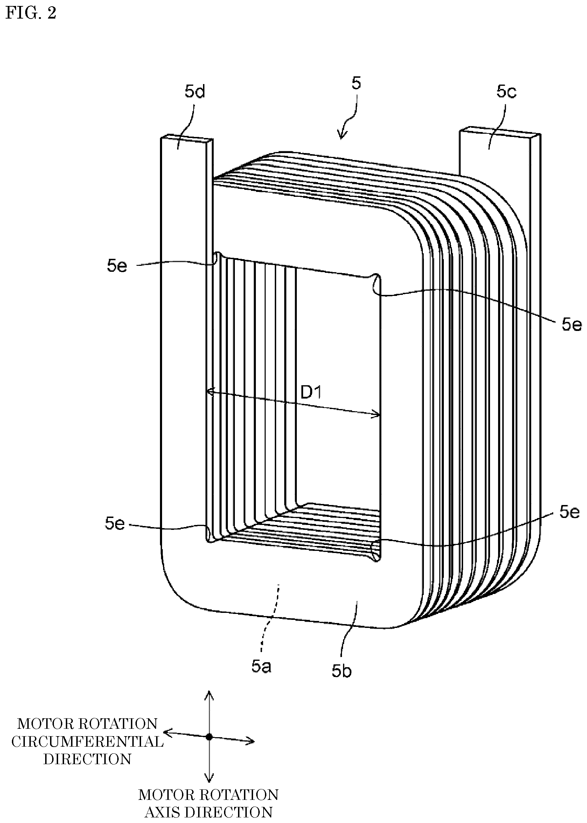

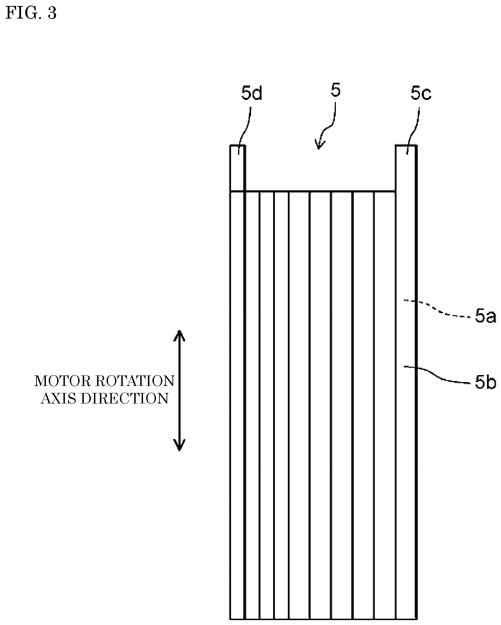

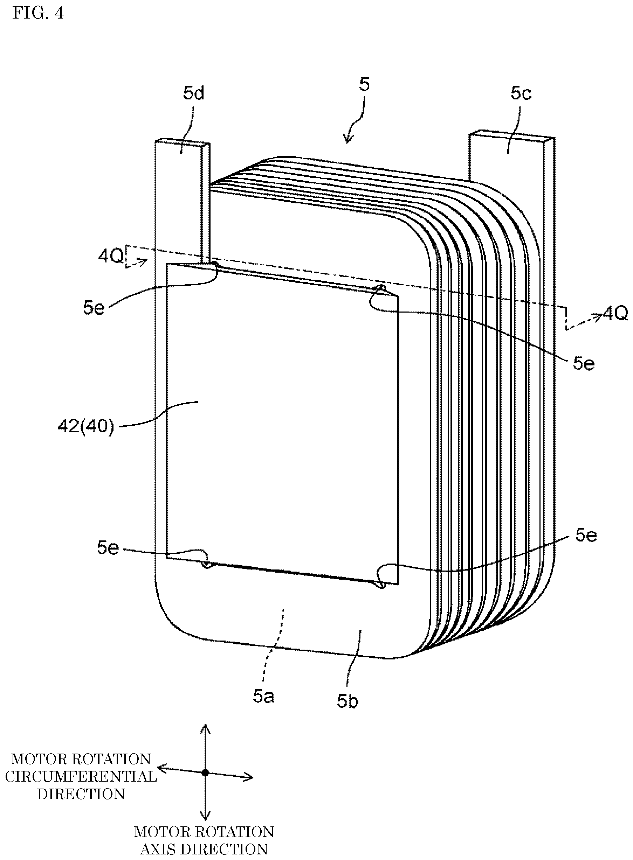

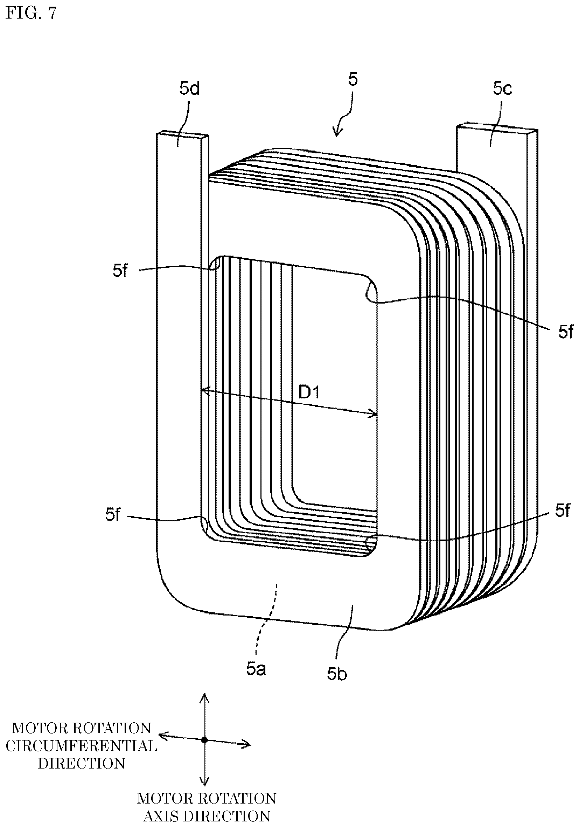

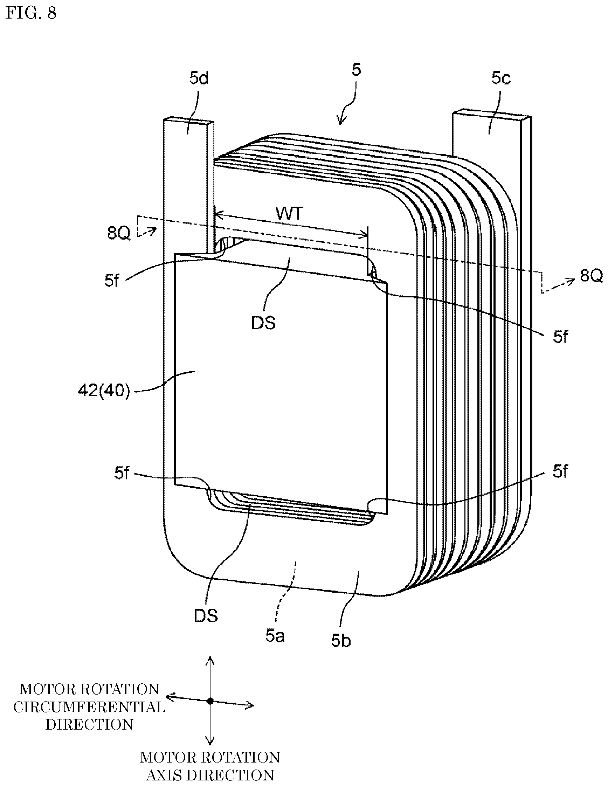

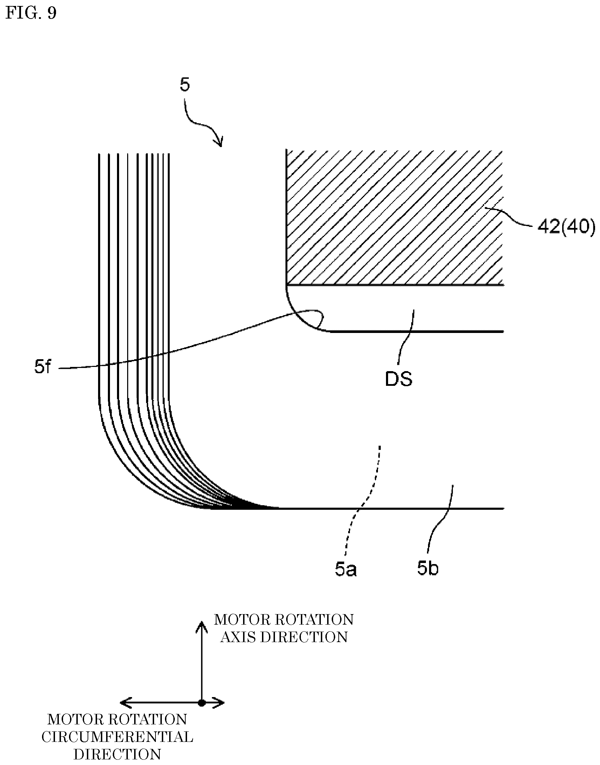

FIG. 2 is a perspective view of coil 5 according to the first exemplary embodiment. FIG. 3 is a side view of coil 5 according to the first exemplary embodiment as viewed from one side in the motor rotation circumferential direction. FIG. 4 is a perspective view in which coil 5 according to the first exemplary embodiment is mounted on tooth portion 42. FIG. 5 is an enlarged sectional view around burr 42a of tooth portion 42 taken along line 4Q-4Q in FIG. 4. FIG. 6 is an enlarged sectional view around shear droop 42b of tooth portion 42 taken along line 4Q-4Q in FIG. 4. FIG. 7 is a perspective view of coil 5 of a comparative example. FIG. 8 is a perspective view of coil 5 of the comparative example, and FIG. 9 is an enlarged sectional view around shear droop 42b of tooth portion 42 of coil 5 of the comparative example taken along line 8Q-8Q in FIG. 8.

Coil 5 according to the first exemplary embodiment illustrated in FIGS. 2 to 6 is applied to coils U11, U22, U32, U41, V12, V21, V31, V42, W11, W22, W32. and W41 mounted on respective tooth portions 42 of motor 1 illustrated in FIG. 1C.

Coil 5 is formed in a shape acquired by bending a plate-like member extending in a strip-like shape in its width direction and spirally winding the plate-like member multiple times forming a quadrangular shape in plan view. Coil 5 includes wound conductor wire 5a, insulating film 5b provided on a surface of conductor wire 5a, draw-out portion 5c drawn out from the first turn of coil 5, and draw-out portion 5d drawn out from the tenth turn.

Conductor wire 5a is made of a conductive member having a quadrangular cross section. Conductor wire 5a is wound ten turns with a single layer in a spiral shape to form a row of turns stacked vertically. Conductor wire 5a is made of, for example, copper, aluminum, zinc, magnesium, brass, iron, steel use stainless (SUS), or the like. Conductor wire 5a can be manufactured, for example, by blanking a sheet metal for each half turn of conductor wire 5a and joining the sheet metal by welding or the like.

In the following description, a portion wound from a tip of draw-out portion 5c to a position corresponding to a portion below draw-out portion 5d is referred to as a first turn, and subsequently a portion wound by one turn is counted as second to tenth turns in order. A starting point for each turn can be set arbitrarily.

Four sides constituting an inner peripheral edge of each of the first to tenth turns of coil 5 include two sides facing each other in the motor rotation axis direction. The two sides are each provided at opposite end portions with respective recesses 5e that are each recessed outward (toward an outer circumference) in the motor rotation axis direction, and are not each recessed outward in the motor rotation circumferential direction, i.e., in a direction in which a portion formed with no recess extends in the side formed with recess 5e, recesses 5e each being formed in a curved shape as a whole.

Insulating film 5b is provided on an entire surface of conductor wire 5a except draw-out portions 5c, 5d to insulate coil 5 from an external member (not illustrated). For example, FIGS. 1A to 1C each illustrate motor 1 in which coil 5 and stator core 40 are insulated by insulating film 5b and an insulating member (not illustrated) such as resin or insulating paper. Adjacent turns in coil 5 are insulated by insulating film 5b. Insulating film 5b is made of, for example, polyimide, nylon, polyether ether ketone (PEEK), acrylic, amide imide, ester imide, enamel, heat resistant resin, or the like. Insulating film 5b has a thickness of about several tens of µm, for example, 10 pm to 50 µm.

Draw-out portions 5c, 5d are each a part of conductor wire 5a. Draw-out portions 5c and 5d each extend outward from a side surface of coil 5, in other words, from a plane intersecting the row of turns of conductor wire 5a, to receive a current supply from the outside or to supply a current to the outside. To be connected to an external member, such as any of bus bars 51 to 54 illustrated in FIGS. 1A to 1C, insulating film 5b is removed from draw-out portions 5c and 5d. Insulating film 5b is not required to be removed in an entire region of draw-out portions 5c, 5d, and for example, insulating film 5b may be removed only from a portion necessary for connection to bus bars 51 to 54.

As illustrated in FIG. 5, the pair of recesses 5e formed on one side of each of the first to tenth turns of coil 5 in the motor rotation axis direction faces corresponding burrs 42a of the corresponding one of tooth portions 42 from a projection direction of each burr 42a (outside in the motor rotation axis direction) and accommodates tip portions of corresponding burrs 42a. As illustrated in FIG. 6, the pair of recesses 5e formed on the other side of each of the first to n-th turns of coil 5 in the motor rotation axis direction faces corresponding shear droops 42b of the corresponding one of tooth portions 42 from the outside in the motor rotation axis direction. Each recess 5e has an outer end portion in a motor circumferential direction that is formed with a rounded portion having radius of curvature R1 larger than radius of curvature R2 of shear droop 42b of each of tooth portions 42. Radius of curvature R1 of the rounded portion formed in each recess 5e is set based on processing accuracy of coil 5, ease of processing work, ease of work of forming insulating film 5b by applying resin, and the like. For example, when shear droop 42b of tooth portion 42 has radius of curvature R2 of about 0.1 mm, radius of curvature R1 of the rounded portion formed in recess 5e is set to 0.3 mm or more. Radius of curvature R1 of the rounded portion formed in recess 5e is set to several mm or less to prevent rigidity of coil 5 from being impaired. Radius of curvature R2 of shear droop 42b of tooth portion 42 is not limited to about 0.1 mm.

Here, a difference in shape between coil 5 for comparison and coil 5 according to the present exemplary embodiment will be described with reference to the drawings.

As illustrated in FIGS. 7 to 9, when coil 5 is provided with no recess 5e, the inner peripheral edge of each of the first to tenth turns of coil 5 is less likely to have a corner formed at a right angle, and thus rounded portion 5f is formed in the corner. Thus, when tooth portion 42 has width WT in the motor rotation circumferential direction that is set as wide as possible in accordance with interval D1 between portions formed with no rounded portion 5f in two sides facing each other in the motor rotation circumferential direction among four sides constituting the inner peripheral edge of each of the first to tenth turns of coil 5, a space between opposite end portions of an inner space of coil 5 in the motor rotation axis direction, i.e., between portions each formed with rounded portion 5f, in the respective two sides facing each other in the motor rotation circumferential direction, becomes dead space DS (air layer) where no tooth portion 42 can be disposed. As a result, coil 5 is deteriorated in heat dissipation efficiency, and a space factor of coil 5 in stator 4 is reduced. This causes motor 1 to be reduced in efficiency.

In contrast, the present exemplary embodiment allows coil 5 to have a rounded portion formed in recess 5e, and to have four sides that constitute the inner peripheral edge of each of the first to tenth turns and that include two sides facing each other in the motor rotation circumferential direction, the two sides being formed with no rounded portion. Thus, even when tooth portion 42 has width WT in the motor rotation circumferential direction that is set to be as wide as possible in accordance with interval D1 between the two sides of coil 5, facing each other in the motor rotation circumferential direction, no dead space is required to be provided in opposite end portions of the inner space of coil 5 in the motor rotation axis direction. This enables the dead space to be reduced as compared to when no recess 5e is provided. As a result, coil 5 can be increased in heat dissipation efficiency, and a space factor of coil 5 in stator 4 can be improved. This enables motor 1 to be increased in efficiency. Additionally, the dead space in each of the opposite end portions of the inner space of coil 5 in the motor rotation axis direction can be reduced, so that motor 1 can be downsized in the motor rotation axis direction by reducing coil 5 in size in the motor rotation axis direction.

When no recess 5e is provided, interval D2 between a region formed with no burr in a burr forming surface of tooth portion 42 and an inner peripheral edge of coil 5 is required to be set longer than a projection height of burr 42a. In contrast, the present exemplary embodiment enables interval D2 (refer to FIG. 5) between the region formed with no burr in the burr forming surface of tooth portion 42 and the inner peripheral edge of coil 5 to be set shorter than when no recess 5e is provided, because burr 42a is accommodated in recess 5e of coil 5. Reducing a dead space formed between the region formed with no burr, in the burr forming surface of tooth portion 42, and the inner peripheral edge of coil 5 in the projection direction of burr 42a, i.e., in the motor rotation axis direction enables improvement in heat dissipation efficiency of coil 5 and increase in a space factor of coil 5 in stator 4, and thus efficiency of motor 1 can be improved. Additionally, the dead space can be reduced in the motor rotation axis direction, so that motor 1 can be downsized in the motor rotation axis direction by reducing coil 5 in size in the motor rotation axis direction.

The first to n-th turns of coil 5 each have a portion extending in the motor rotation axis direction that is formed with no recess 5e, and thus the portion has a lower resistance value than when recess 5e is formed. Thus, a portion of coil 5, extending in the motor rotation axis direction, can be reduced in width as a whole, so that motor 1 can be downsized in the motor rotation circumferential direction.

This structure does not cause large contact pressure to be applied to a surface of coil 5 due to contact between a corner of recess 5e of coil 5 and tooth portion 42 during assembly, as compared to when the corner is provided in recess 5e of coil 5. This enables preventing insulating film 5b of coil 5 from being damaged during assembly.

As described above, the mounting structure of coil 5 of the present exemplary embodiment includes: coil 5 having first to n-th turns (n is an integer of 2 or more) that are formed by bending a plate-like member extending in a strip-like shape in a width direction of the plate-like member and spirally winding the plate-like member multiple times forming a quadrangular shape in plan view; and a columnar core extending with a quadrangular cross section in an extending direction, coil 5 being mounted on the columnar core, the columnar core being composed of a stacked body in which a plurality of core sheets made of electromagnetic steel sheets are stacked in a stacking direction orthogonal to the extending direction of the columnar core, the columnar core having one end surface in the stacking direction of the columnar core, with an outer periphery in which burr 42a is formed and projected in a projection direction, the first to n-th turns of coil 5 each having an inner peripheral edge formed with recess 5e that is recessed toward an outer periphery of coil 5, and recess 5e facing burr 42a of the columnar core from the projection direction of burr 42a.

This structure enables burr 42a to be accommodated in recess 5e of coil 5 even when burr 42a has a projection height higher than an interval between the region formed with no burr, in the burr forming surface of the columnar core, and the portion formed with no recess, in the inner peripheral edge of coil 5. Thus, the interval between the region formed with no burr, in the burr forming surface of the columnar core, and the portion formed with no recess, in the inner peripheral edge of coil 5, can be set shorter than when no recess 5e is provided. This enables improvement in heat dissipation efficiency of coil 5 by reducing a dead space formed between the region formed with no burr, in the burr forming surface of the columnar core, and the inner peripheral edge of coil 5 in the projection direction of burr 42a. Additionally, the dead space can be reduced in the projection direction of burr 42a, so that coil 5 can be reduced in size in the projection direction of burr 42a.

Recess 5e may accommodate a tip portion of burr 42a.

This structure enables the interval between the region formed with no burr, in the burr forming surface of the columnar core, and the portion formed with no recess, in the inner peripheral edge of coil 5, to be set shorter than when no recess is provided, because burr 42a is accommodated in recess 5e of coil 5. This enables improvement in heat dissipation efficiency of coil 5 by reducing a dead space formed between the region formed with no burr, in the burr forming surface of the columnar core, and the inner peripheral edge of coil 5 in the projection direction of burr 42a. Additionally, the dead space can be reduced in the projection direction of burr 42a, so that coil 5 can be reduced in size in the projection direction of burr 42a.

Recess 5e may be formed at each of opposite ends of one side or opposite end portions of each of two sides facing each other of four sides of the quadrangular shape in plan view, constituting the inner peripheral edge of each of the first to n-th turns of coil 5, and may not be recessed in a direction in which the portion formed with no recess, in the side formed with recess 5e, extends.

This structure allows no recess 5e to be formed in a portion extending along a side formed with no recess 5e in each of the first to n-th turns of coil 5, so that a resistance value of coil 5 is reduced as compared to when recess 5e is formed. Thus, a width of a portion of the coil extending along the side formed with no recess 5e can be set to be short as a whole. This enables coil 5 to be downsized.

Coil 5 may include conductor wire 5a equivalent to a plate-like member and insulating film 5b provided on a surface of conductor wire 5a, and the recess may be formed in a curved shape as a whole.

This structure does not cause large contact pressure to be applied to a coil surface due to contact between a corner of recess 5e of coil 5 and the columnar core during assembly, as compared to when the corner is provided in recess 5e of coil 5. This enables preventing insulating film 5b of coil 5 from being damaged during assembly.

The mounting structure of coil 5 of the present exemplary embodiment includes: tooth portions 42 that each have a quadrangular cross section, and that are each projected on an inner peripheral surface of annular yoke section 41 of stator 4 of motor 1 while having an outer peripheral surface of each of tooth portions 42, composed of a pair of first surfaces facing a motor rotation axis direction and a pair of second surfaces facing a motor rotation circumferential direction; and coil 5 having first to n-th turns (n is an integer of 2 or more) that are formed by bending a plate-like member extending in a strip-like shape in a width direction of the plate-like member and spirally winding the plate-like member multiple times forming a quadrangular shape in plan view; coil 5 being mounted on each of tooth portions 42, the first to n-th turns of the coil each having an inner peripheral edge with two sides facing the motor rotation axis direction, the two sides including at least one side having opposite end portions formed with respective recesses 5e that are recessed outward in the motor rotation axis direction and are not recessed outward in the motor rotation circumferential direction.

This structure allows coil 5 to have rounded portions 5f formed in respective recesses 5e, and to have four sides that constitute the inner peripheral edge of each of first to tenth turns and that include two sides facing each other in the motor rotation circumferential direction, the two sides each including at least one end portion formed with no rounded portion 5f. Thus, even when tooth portions 42 each have a width in the motor rotation circumferential direction that is set to be as wide as possible in accordance with an interval between the two sides of coil 5, facing each other in the motor rotation circumferential direction, no dead space is required to be provided in at least one end portion of an inner space of coil 5 in the motor rotation axis direction. As compared to when no recess 5e is provided, reducing the dead space enables improvement in heat dissipation efficiency of the coil and increase in a space factor of coil 5 in stator 4, and thus efficiency of motor 1 can be improved. Additionally, a dead space in the end portion of the inner space of coil 5 in the motor rotation axis direction can be reduced. Thus, reducing coil 5 in size in the motor rotation axis direction enables motor 1 to be downsized in the motor rotation axis direction.

The first to n-th turns of coil 5 each have a portion extending in the motor rotation axis direction that is formed with no recess 5e, and thus the portion has a lower resistance value than when recess 5e is formed. Thus, a portion of coil 5, extending in the motor rotation axis direction, can be reduced in width as a whole, so that motor 1 can be downsized in the motor rotation circumferential direction.

Tooth portions 42 may be each composed of a stacked body formed by stacking a plurality of core sheets made of electromagnetic steel sheets in the motor rotation axis direction, and burr 42a may be formed and projected in an outer periphery in one end surface of each of tooth portions 42 in the motor rotation axis direction. Recess 5e may face burr 42a of the corresponding one of tooth portions 42 from a projection direction of burr 42a.

This structure enables burr 42a to be accommodated in recess 5e of coil 5 even when burr 42a has a projection height higher than an interval between the region formed with no burr, in the burr forming surface of each of tooth portions 42, and the portion formed with no recess, in the inner peripheral edge of the coil. Thus, the interval between the region formed with no burr, in the burr forming surface of each of tooth portions 42, and the portion formed with no recess, in the inner peripheral edge of coil 5, can be set shorter than when no recess 5e is provided. Reducing a dead space formed between the region formed with no burr, in the burr forming surface of tooth portion 42, and the inner peripheral edge of coil 5 in the projection direction of burr 42a, i.e., in rotation axis direction of motor 1 enables improvement in heat dissipation efficiency of coil 5 and increase in a space factor of coil 5 in stator 4, and thus efficiency of motor 1 can be improved. The dead space can be narrowed in the motor rotation axis direction. Thus, reducing coil 5 in size in the motor rotation axis direction enables motor 1 to be downsized in the motor rotation axis direction.

Coil 5 may include conductor wire 5a equivalent to a plate-like member and insulating film 5b provided on a surface of conductor wire 5a, and recess 5e may be formed in a curved shape as a whole.

This structure does not cause large contact pressure to be applied to a coil surface due to contact between a corner of recess 5e of coil 5 and each of tooth portions 42 during assembly, as compared to when the corner is provided in recess 5e of coil 5. This enables preventing insulating film 5b of coil 5 from being damaged during assembly.

### (Second exemplary embodiment)

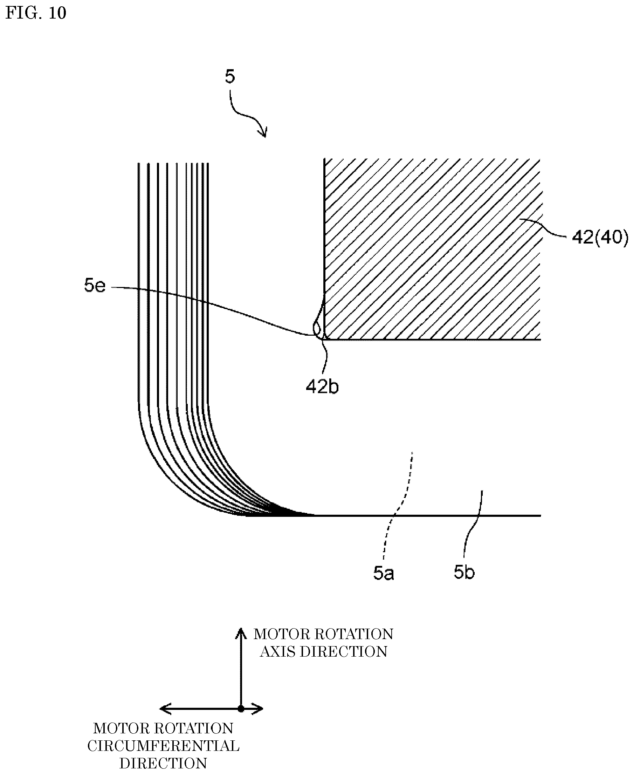

FIG. 10 is an enlarged sectional view around a shear droop when a coil according to a second exemplary embodiment is mounted on a tooth portion. The present exemplary embodiment allows recesses 5e to be formed in respective opposite end portions of each of two sides facing each other in the motor rotation circumferential direction among four sides constituting an inner peripheral edge of each of first to tenth turns of coil 5, recesses 5e each being recessed outward in the motor rotation circumferential direction and not being recessed outward in the motor rotation axis direction. Motor 1 is identical in another structure to that of the first exemplary embodiment, so that the same components are denoted by the same reference numerals and duplicated detailed description thereof will be eliminated.

The present exemplary embodiment allows coil 5 to have a rounded portion formed in recess 5e, and to have four sides constituting the inner peripheral edge of each of the first to tenth turns and including two sides facing the motor rotation axis direction, the two sides being formed with no rounded portion. Thus, even when tooth portion 42 has a width in the motor rotation axis direction that is set to be as wide as possible in accordance with an interval between the two sides of coil 5, facing each other in the motor rotation axis direction, no dead space is required to be provided in opposite end portions of the inner space of coil 5 in the motor rotation circumferential direction. As compared to when no recess 5e is provided, reducing the dead space enables improvement in heat dissipation efficiency of coil 5 and increase in a space factor of coil 5 in stator 4, and thus efficiency of motor 1 can be improved. Additionally, the dead space in each of the opposite end portions of the inner space of coil 5 in the motor rotation circumferential direction can be reduced, so that motor 1 can be downsized in the motor rotation circumferential direction by reducing coil 5 in size in the motor rotation circumferential direction.

The first to n-th turns of coil 5 each have a portion extending in the motor rotation circumferential direction that is formed with no recess 5e, and thus the portion has a lower resistance value than when recess 5e is formed. Thus, a portion of coil 5, extending in the motor rotation circumferential direction, can be reduced in width as a whole, so that motor 1 can be downsized in the motor rotation axis direction.

As described above, the mounting structure of coil 5 of the present exemplary embodiment includes: tooth portions 42 that each have a quadrangular cross section, and that are each projected on an inner peripheral surface of annular yoke section 41 of stator 4 of motor 1 while each of tooth portions 42 having the quadrangular cross section has an outer peripheral surface including two sides constituting a pair of first surfaces facing each other in a motor rotation axis direction, and two sides constituting a pair of second surfaces facing each other in a motor rotation circumferential direction; and coil 5 having first to n-th turns (n is an integer of 2 or more) that are formed by bending a plate-like member extending in a strip-like shape in a width direction of the plate-like member and spirally winding the plate-like member multiple times forming a quadrangular shape in plan view; coil 5 being mounted on each of tooth portions 42, the first to n-th turns of the coil each having an inner peripheral edge with two sides facing each other in the motor rotation circumferential direction, the two sides including at least one side having opposite end portions formed with respective recesses 5e that are recessed outward in the motor rotation circumferential direction and are not recessed outward in the motor rotation axis direction.

This structure allows coil 5 to have rounded portions 5f formed in respective recesses 5e, and to have four sides that constitute the inner peripheral edge of each of first to tenth turns and that include two sides facing each other in the motor rotation axis direction, the two sides each including at least one end portion formed with no rounded portion 5f. Thus, even when tooth portions 42 each have a width in the motor rotation axis direction that is set to be as wide as possible in accordance with an interval between the two sides of coil 5, facing each other in the motor rotation axis direction, no dead space is required to be provided in at least one end portion of an inner space of coil 5 in the motor rotation circumferential direction. As compared to when no recess 5e is provided, reducing the dead space enables improvement in heat dissipation efficiency of coil 5 and increase in a space factor of coil 5 in stator 4, and thus efficiency of motor 1 can be improved. Additionally, a dead space in the end portion of the inner space of coil 5 in the motor rotation circumferential direction can be reduced. Thus, reducing coil 5 in size in the motor rotation circumferential direction enables motor 1 to be downsized in the motor rotation circumferential direction.

The first to n-th turns of coil 5 each have a portion extending in the motor rotation circumferential direction that is formed with no recess, and thus the portion has a lower resistance value than when recess 5e is formed. Thus, a portion of coil 5, extending in the motor rotation circumferential direction, can be reduced in width as a whole, so that motor 1 can be downsized in the motor rotation axis direction.

### (Third exemplary embodiment)

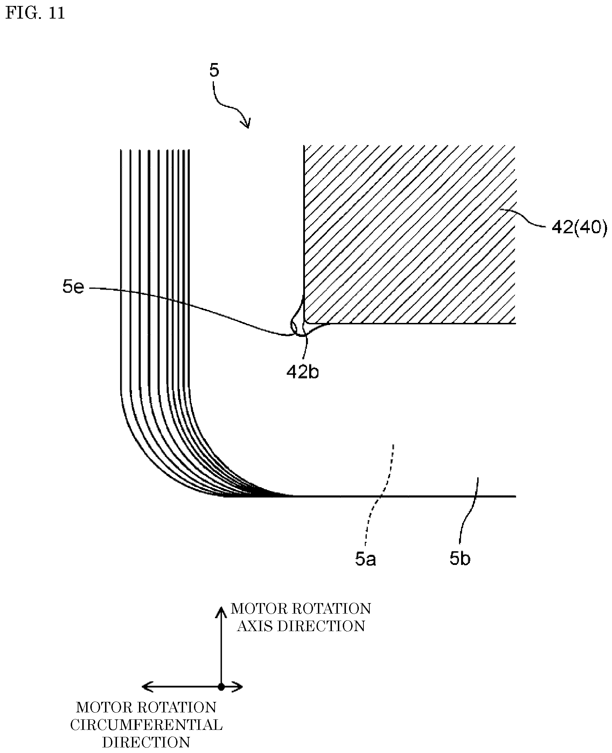

FIG. 11 is an enlarged sectional view around a shear droop when a coil according to a third exemplary embodiment is mounted on a tooth portion. The present exemplary embodiment allows recesses 5e to be continuously formed between opposite end portions of each of two sides facing each other in the motor rotation circumferential direction and corresponding opposite end portions of each of two sides facing each other in the motor rotation circumferential direction among four sides constituting an inner peripheral edge of each of first to tenth turns of coil 5, recesses 5e each being recessed obliquely outward from the motor rotation circumferential direction toward the outside in the motor rotation axis direction. That is, recess 5e is recessed outward in the motor axis direction and outward in the motor rotation circumferential direction.

Motor 1 is identical in another structure to that of the first exemplary embodiment, so that the same components are denoted by the same reference numerals and duplicated detailed description thereof will be eliminated.

The first to third exemplary embodiments each include recess 5e (a portion corresponding recess 5e in the inner peripheral edge of coil 5) formed in a curved shape as a whole. However, when a rounded portion can be partly formed in recess 5e (the portion corresponding recess 5e in the inner peripheral edge of coil 5), a remaining portion of recess 5e may be partly formed in a linear shape.

Although the first exemplary embodiment includes recess 5e of coil 5 that accommodates only the tip portion of burr 42a, a whole of burr 42a may be accommodated. Recess 5e of coil 5 may not usually accommodate burr 42a, and burr 42a may be accommodated in recess 5e of coil 5 only when burr 42a increases in projection height due to manufacturing variations.

Although the first exemplary embodiment includes recesses 5e formed at respective opposite end portions of each of the two sides facing each other in the motor rotation axis direction at the inner peripheral edge of each of the first to n-th turns of coil 5, recesses 5e may be formed in only any one of the two sides.

Although the second exemplary embodiment includes recesses 5e formed at respective opposite end portions of each of the two sides facing each other in the motor rotation circumferential direction at the inner peripheral edge of each of the first to n-th turns of coil 5, recesses 5e may be formed in only any one of the two sides.

Although the first to third exemplary embodiments each include coil 5 having a turn number (n) set to 10, the turn number may be set to an integer other than 10 as long as it is 2 or more.

Although the first to third exemplary embodiments each include conductor wire 5a of coil 5 that is made of a wire material having a quadrangular cross section, conductor wire 5a may be made of a wire material having a trapezoidal or rhombic cross section.

### INDUSTRIAL APPLICABILITY

The coil mounting structure according to the present disclosure can improve heat dissipation efficiency of the coil and is useful for application to a coil device, a motor, a power device, and the like.

### REFERENCE MARKS IN THE DRAWINGS

- 1: motor
- 2: shaft
- 2a: hollow portion
- 2b: through-hole
- 3: rotor
- 4: stator
- 5: coil
- 5a: conductor wire
- 5b: insulating film
- 5c: draw-out portion
- 5d: draw-out portion
- 5e: recess
- 5f: rounded portion
- 31: magnet
- 40: stator core
- 41: yoke section
- 42: tooth portion
- 42a: burr
- 42b: shear droop
- 43: slot
- 51, 52, 53, 54: bus bar
- C: refrigerant
- U11, U22, U32, U41, V12, V21, V31, V42, W11, W22, W32, W41: coil

## Claims

1. A coil mounting structure comprising:
a coil including first to n-th turns, where n is an integer of 2 or more, the first to n-th turns being formed by bending a plate-like member extending in a strip-like shape in a width direction of the plate-like member and spirally winding the plate-like member multiple times forming a quadrangular shape in plan view; and
a columnar core extending with a quadrangular cross section in an extending direction,
the coil being mounted on the columnar core,
the columnar core being composed of a stacked body in which a plurality of core sheets made of electromagnetic steel sheets are stacked in a stacking direction orthogonal to the extending direction of the columnar core,
the columnar core having one end surface in the stacking direction of the columnar core, with an outer periphery in which a burr is formed and projected in a projection direction,
the first to n-th turns of the coil each having an inner peripheral edge formed with a recess that is recessed toward an outer periphery of the coil, and
the recess facing the burr of the columnar core from the projection direction of the burr.

2. The coil mounting structure according to claim 1, wherein the recess accommodates a tip portion of the burr.

3. The coil mounting structure according to claim 1, wherein the recess is formed at each of opposite ends of one side or each of opposite end portions of respective two sides facing each other among four sides of the quadrangular shape in plan view, constituting the inner peripheral edge of each of the first to n-th turns of the coil, and is not recessed in a direction in which a portion formed with no recess, in a side formed with the recess, extends.

4. The coil mounting structure according to claim 1, wherein
the coil includes the plate-like member and an insulating film provided on a surface of the plate-like member, and
the recess is formed in a curved shape as a whole.

5. A stator comprising:
tooth portions; and
a yoke section in an annular shape;
a coil mounting structure including:
the tooth portions that each have a quadrangular cross section and that are each projected on an inner peripheral surface of the yoke section of the stator of a motor while an outer peripheral surface of each of the tooth portions includes a pair of surfaces having one surface facing a motor rotation axis direction and another surface facing a motor rotation circumferential direction; and
a coil having first to n-th turns, where n is an integer of 2 or more, the first to n-th turns being formed by bending a plate-like member extending in a strip-like shape in a width direction of the plate-like member and spirally winding the plate-like member multiple times forming a quadrangular shape in plan view, the coil being mounted on each of tooth portions,
the coil mounting structure including the first to n-th turns of the coil each having an inner peripheral edge with two sides facing each other in the motor rotation axis direction, the two sides including at least one side having opposite end portions formed with respective recesses that are recessed outward in the motor rotation axis direction and are not recessed outward in the motor rotation circumferential direction.

6. The stator according to claim 5, wherein
the coil mounting structure includes
the tooth portions that are each composed of a stacked body formed by stacking a plurality of core sheets made of electromagnetic steel sheets in the motor rotation axis direction,
a burr that is formed and projected in an outer periphery in one end surface of each of the tooth portions in the motor rotation axis direction, and
the recesses that include a recess facing the burr of a corresponding one of the tooth portions from a projection direction of the burr.

7. A motor comprising:
a shaft;
a rotor;
a stator including tooth portions and a yoke section in an annular shape, the tooth portions each having a quadrangular cross section; and
a coil mounting structure including:
the tooth portions that each have the quadrangular cross section and that are each projected on an inner peripheral surface of the yoke section of the stator of the motor while an outer peripheral surface of each of the tooth portions, having the quadrangular cross section, includes a pair of surfaces composed of two sides facing each other in the outer peripheral surface, the pair of surfaces having one surface facing a motor rotation axis direction and another surface facing a motor rotation circumferential direction; and
a coil having first to n-th turns, where n is an integer of 2 or more, the first to n-th turns being formed by bending a plate-like member extending in a strip-like shape in a width direction of the plate-like member and spirally winding the plate-like member multiple times forming a quadrangular shape in plan view, the coil being mounted on each of tooth portions,
the coil mounting structure including the first to n-th turns of the coil each having an inner peripheral edge with two sides facing each other in the motor rotation circumferential direction, the two sides including at least one side having opposite end portions formed with respective recesses that are recessed outward in the motor rotation circumferential direction and are not recessed outward in the motor rotation axis direction.

8. The stator according to claim 5, wherein
the coil includes the plate-like member and an insulating film provided on a surface of the plate-like member, and
the recess is formed in a curved shape as a whole.

9. The motor according to claim 7, wherein
the coil includes the plate-like member and an insulating film provided on a surface of the plate-like member, and
the recess is formed in a curved shape as a whole.
